# EUROPÄISCHE PATENTSCHRIFT

(11) **EP 4 095 224 B1**
(45) Veröffentlichungstag und Bekanntmachung des Hinweises auf die Patenterteilung: **07.08.2024**
(21) Anmeldenummer: 21175892.5
(22) Anmeldetag: 26.05.2021
(51) Int. Cl.: F04B 53/06, F04B 53/10, C12H 1/14

(54) **VERFAHREN UND VORRICHTUNG ZUR KONSERVIERUNG VON GETRÄNKEN MIT PUMPENENTLÜFTUNG**
METHOD AND DEVICE FOR PRESERVING BEVERAGES WITH PUMP VENTILATION
PROCÉDÉ ET DISPOSITIF DE CONSERVATION DE BOISSONS PAR DÉAÉRATION D'UNE POMPE

(43) Veröffentlichungstag der Anmeldung: 30.11.2022
(73) Patentinhaber: LANXESS Deutschland GmbH, 50569 Köln (DE)
(72) Erfinder: BURGHOLZ, Jonas, 50937 Köln (DE); VOGL, Erasmus, 51429 Bergisch Gladbach (DE); SARTORIUS, Gerhard, 35394 Giessen (DE); KUBATZ, Axel, 35460 Staufenberg (DE)
(74) Vertreter: Hannke Bittner & Partner mbB Regensburg

(56) Entgegenhaltungen:
- EP-A1- 2 241 200
- EP-B1- 0 968 370
- DE-A1- 102014 010 823
- DE-C1- 3 631 984
- DE-U- 7 107 859
- DE-U1- 202008 001 131
- US-A- 6 065 940

## Beschreibung

Die Erfindung betrifft ein Verfahren und eine Vorrichtung zur Konservierung von Getränken sowie die Verwendung der Vorrichtung zu diesem Zweck.

Konservierungsmittel, wie z.B. Dialkyldicarbonate, Schwefeldioxid, Natamycin, Benzoate oder Sorbate werden in der Getränkeindustrie zur Kaltentkeimung von alkoholfreien karbonisierten oder stillen Fruchtsaftgetränken, Fruchtsäften, Weinen, alkoholfreien Weinen, Ciders, Eis-Tees und anderen Getränken eingesetzt. Ein besonderes Kaltentkeimungsmittel stellen die Dialkyldicarbonate, wie insbesondere Dimethyldicarbonat oder Diethyldicarbonat, dar, die eine Reihe von Vorteilen aufweisen. Der herausragende Vorteil liegt dabei in der Tatsache begründet, dass Geschmack und Farbe, im Gegensatz zur Heißabfüllung, nicht beeinflusst werden. Auch gegenüber persistenten Konservierungsstoffen, wie Natriumbenzoat bzw. Benzoesäure oder Kaliumsorbat bzw. Sorbinsäure, besteht der Vorteil insbesondere in der Abwesenheit jeglicher geschmacklicher Beeinträchtigungen und dem Verschwinden der Wirkung. Auf Grund des Zerfalls der Dialkyldicarbonate in unbedenkliche Bestandteile wird durch den eigentlichen Verbraucher kein Konservierungsstoff bzw. Konservierungsmittel konsumiert.

Gegenüber einer kaltaseptischen Abfüllung sind besonders die ganz wesentlich geringeren Investitionskosten in Anlagentechnik als Vorteil beim Einsatz von Dialkyldicarbonaten bekannt.

Nach dem Stand der Technik werden zur Zugabe von Dialkyldicarbonate ausschließlich on-line - Membran-Dosierpumpen verwendet. Dies ist nötig, da die zu behandelnde Getränkemenge nicht von vorneherein feststeht. Ein Vorteil von Membranpumpen besteht darin, dass deren Pumpraum vollständig abgeschlossen ist.

Die Apparate mit Membranpumpen bestehen in der Regel aus einer magnetisch oder elektrisch angetriebenen Membranpumpe, Vorratsgefäßen, einer an die Getränkeleitung angebrachten Vorrichtung zur Verdüsung des Dialkyldicarbonates, einem an die Getränkeleitung angebrachten Durchflussmessgerät, sowie einer Elektronik-Steuerung. Dosierpumpen dieser Art sind üblicherweise fest in die Getränkelinie installiert.

Die Dosierpumpen sollen dabei für mehrere unterschiedliche Leistungsparameter geeignet sein, insbesondere für Klein- und Kleinstmengen. Daneben sollen diese Dosierpumpen eine hohe Genauigkeit bei der Eindosierung, einen hohen Verdüsungsdruck und einen weiten Regelbereich aufweisen.

Die Funktionsweise dieser Geräte beruht auf der on-line - Messung der im Getränkerohr herrschenden Getränkedurchflussrate und der daraus parallel berechneten Menge an zu dosierendem Dialkyldicarbonat. Dialkyldicarbonate werden damit jeweils proportional in der benötigten Menge in das Getränkerohr zudosiert. Beispiele dieser Pumpen sind die VelcorinDT-Geräte der Firma Lanxess.

Bei der Behandlung von Getränken, beispielsweise alkoholfreien Erfrischungsgetränken oder Wein oder Biermischgetränken, kann eine kaltsterile Behandlung mit Dialkyldicarbonaten beispielsweise zur Bekämpfung von Bakterien oder Hefen nötig werden. Zur Behandlung werden deshalb die erwähnten Dosiergeräte eingesetzt.

Aus der WO1998042983A1 ist eine Dosierpumpe zum dosierten Fördern von Flüssigkeiten bekannt.

Aus der DE 20 2008 001 131 U1 ist ein Verfahren zur automatischen Entlüftung für Kolben- und Membranpumpen bekannt. Hierzu wird zunächst mittels eines Sensors, welcher zwischen der Pumpe und dem Saugschlauch angeordnet ist, die Saugkraft der Pumpe überwacht. Wird eine zu geringe Saugleistung erfasst, wird die Pumpensteuerung gestoppt.

Anschließend wird ein Magnetventil zur Entlüftung (Druckabbau) geöffnet. Danach wird die Pumpe in ihrer maximalen Hubzahl angesteuert, wodurch die zu dosierende Flüssigkeit in angesaugt wird und durch das Magnetventil mit den im Pumpenkopf befindlichen Gasen durch den Schlauch zurück in den Vorratsbehälter der zu dosierenden Flüssigkeit gebracht wird. Nachdem der Sensor erneut die volle Saugleistung erfassen kann, wird das Magnetventil (Entlüftungsventil) geschlossen und die Pumpe kann wieder wie gewohnt weiterverwendet werden. Sollte dies nicht der Fall sein, so wird eine Fehlermeldung an den Betreiber der Anlage ausgeben.

Aus der DE 10 2014 010 823 A1 ist ein Verfahren zum Betrieb einer Dosieranlage zur Zugabe einer Zugabeflüssigkeit zu einer Basisflüssigkeit bekannt, wobei die Zugabeflüssigkeit in einem austauschbaren Behälter gelagert ist, der über ein Dosierventil mit einer Leitung für die Basisflüssigkeit verbunden ist, wobei an die Leitung ein Entlüftungsbehälter angeschlossen ist und der austauschbare Behälter oberhalb der Leitung für die Basisflüssigkeit und oberhalb des Entlüftungsbehälters gelagert ist, wobei der Flüssigkeitsstand im Entlüftungsbehälter vor Zugabe der Zugabeflüssigkeit abgesenkt wird. Durch Beobachtung des Flüssigkeitsstands kann ein leer werdender Flüssigkeitsbehälter erkannt werden.

Aus der EP 2 241 200 A1 ist die Verwendung von Dialkyldicarbonaten zur Herstellung von mikrobiell stabilisierten Getränken bekannt. Hierbei wird vor der Abfüllung eines Getränkes Dialkyldicarbonat zugegeben, das Getränk abgefüllt und anschließend die Temperatur um wenigstens drei Grad erhöht.

Die für derartige Vorrichtung und Verfahren eingesetzten Dosierpumpen müssen dabei unterschiedliche Leistungsparameter erfüllen. Einerseits sollen sie geeignet sein, um Klein- bzw. Kleinstmengen zuzuführen. Daneben sollten diese Dosierpumpen eine hohe Genauigkeit aufweisen, gleichzeitig jedoch auch einen hohen Verdüsungsdruck zur Verfügung stellen und daneben einen weiten Regelbereich aufweisen, insbesondere für unterschiedlichste Anwendungen.

Es hat sich allerdings gezeigt, dass die verwendeten Konservierungsmittel in einem bestimmten Maß ausgasen. Die im Stand der Technik verwendeten Pumpen reagieren empfindlich auf ausgasende Medien, die zu großen Dosierschwankungen bis hin zu einem Funktionsausfall führen können.

Es stellt sich daher ausgehend vom Stand der Technik die Aufgabe, den Dosiervorgang zu stabilisieren. Dies wird erfindungsgemäß durch die Gegenstände der unabhängigen Patentansprüche erreicht. Vorteilhafte Ausführungsformen und Weiterbildungen sind Gegenstand der Unteransprüche.

Diese Aufgabe wird durch eine Vorrichtung zur Konservierung von Getränken gelöst, welche die Merkmale des Anspruchs 1 aufweist.

Eine erfindungsgemäße Vorrichtung zur Konservierung von Getränken weist eine Messeinrichtung auf, welche dazu geeignet und bestimmt ist, eine Durchflussmenge einer durch eine Getränkeleitung fließenden Flüssigkeit zu bestimmen sowie eine Pumpeneinrichtung, welche ein Konservierungsmittel, insbesondere Dialkyldicarbonate in die Getränkeleitung fördert und wobei die Pumpeneinrichtung in Abhängigkeit von einer von der Messeinrichtung bestimmten Durchflussmenge steuerbar ist, wobei die Vorrichtung eine Entlüftungseinrichtung zur Entlüftung der Pumpeneinrichtung aufweist, wobei diese Entlüftungseinrichtung eine Ventileinrichtung aufweist, und die Vorrichtung ein Messgefäß zur Erfassung eines Pegelstands eines flüssigen und/oder gasförmigem Mediums aufweist, wobei eine sich an die Ventileinrichtung anschließende Leitung zum Leiten eines gasförmigen und/oder flüssigen Mediums in das Messgefäß mündet.

Die hier beschriebene Erfindung dient insbesondere dazu, Vorkehrungen zu treffen, um den Dosiervorgang weitestgehend gasfrei zu realisieren und insbesondere Gasbläschen sicher aus der Pumpeneinrichtung zu entfernen.

Bevorzugt weist die Vorrichtung eine Förderleitung auf, welche in die Getränkeleitung mündet und bevorzugt fördert die Pumpeneinrichtung das Konservierungsmittel durch diese Förderleitung.

Im Folgenden wird vereinfachend der Begriff "Entlüftung" verwendet, auch wenn es sich bei dem auszuleitenden Medium um andere Gase als Luft handelt. Bevorzugt handelt es sich bei den Gasen um Gase, welche aus einer Gruppe von Gasen ausgewählt ist, welche CO₂ , Methanol, Methylcarbonat und Dimethylcarbonat enthält.

Bei einer weiteren bevorzugten Ausführungsform weist die Vorrichtung eine Düseneinrichtung und insbesondere einen Düsenkopf auf, welche das Konservierungsmittel in die Getränkeleitung eindüst und/oder das Konservierungsmittel in der Getränkeleitung und/oder in dem Getränk verdüst. Diese Düseneinrichtung bzw. dieser Düsenkopf ragt bevorzugt wenigstens abschnittsweise in die Getränkeleitung hinein.

Bevorzugt ist die Düseneinrichtung bzw. der Düsenkopf ein Bestandteil der Förderleitung und bildet insbesondere ein Ende dieser Förderleitung.

Bevorzugt dient daher die Pumpeneinrichtung zum Verdüsen des Konservierungsmittels in die Getränkeleitung und/oder in das Getränk. Bevorzugt handelt es sich damit bei der Pumpeneinrichtung um eine Pumpeneinrichtung, welche dazu geeignet und bestimmt ist, ein Medium, wie hier das Konservierungsmittel unter Druck zu fördern und/oder um eine Pumpeneinrichtung, welche dazu geeignet und bestimmt ist, eine Verdüsung des Konservierungsmittels in der Getränkeleitung zu bewirken.

Bevorzugt handelt es sich bei der Ventileinrichtung um eine gesteuerte Ventileinrichtung. Unter einer gesteuerten Ventileinrichtung wird eine (insbesondere aktive) Ventileinrichung verstanden, welche durch einen Steuerungsvorgang aktiv betätigt werden kann und welche insbesondere nicht aufgrund eines Überdrucks oder einer Strömungsbewegung öffnet wie etwa ein Rückschlagventil.

Die Erfindung beschreibt damit eine Vorrichtung und ein Verfahren zur Pumpenentlüftung und insbesondere zur Pumpenkopfentlüftung und insbesondere zur vollautomatischen Pumpenkopfentlüftung. Daneben soll, wie unten genau beschrieben, bevorzugt auch eine manuelle Eingriffsmöglichkeit und/oder eine Eingriffsmöglichkeit durch einen Benutzer gegeben sein.

Bei einer besonders bevorzugten Ausführungsform handelt es sich bei der Pumpeneinrichtung um eine Dosierpumpe und insbesondere um eine Membranpumpe bzw. eine Membrandosierpumpe. Membranpumpen haben sich als geeignete Pumpeneinrichtungen erwiesen, um die oben beschriebenen Kriterien zu erfüllen.

In einer bevorzugten Ausführungsform weist diese Pumpeneinrichtung eine Förderleistung auf, die größer ist als 0,01 l/h und bevorzugt größer als 0,02 l/h. Bevorzugt weist die Pumpeneinrichtung eine Förderleistung auf, die geringer ist als 60 l/h, bevorzugt geringer als 50 l/h, bevorzugt geringer als 40 l/h, bevorzugt geringer als 30 l/h und bevorzugt geringer als bis 20 l/h.

Bevorzugt ist die Pumpeneinrichtung in einem Leistungsbereich regelbar, bei dem das Verhältnis zwischen der geringsten Förderleistung und der höchsten Förderleistung geringer ist als 0,1, bevorzugt geringer als 0,01. Auf diese Weise können mit einem einzigen Pumpentyp unterschiedlichste Anforderungen bei der Abfüllung von Getränken erfüllt werden.

Bevorzugt fördert die Pumpeneinrichtung das Konservierungsmittel unter Druck zu einer Düseneinrichtung, und bevorzugt unter einem Druck der zwischen 5bar und 100bar, bevorzugt zwischen 15bar und 50bar liegt.

Bevorzugt wird das Getränk durch die Getränkeleitung mit einem Durchfluss von 40l/h - 80000l/h gefördert.

Besonders bevorzugt dient die oben beschriebene Ventileinrichtung zur Entlüftung eines Pumpenkopfs der Pumpeneinrichtung und/oder eines vorgegebenen Bereichs der Pumpeneinrichtung, in dem sich ausgasende Medien sammeln können und/oder der das zu dosierende Medium in Richtung der Getränkeleitung drängt.

Der Pumpenkopf wird in der Literatur z.T. auch Dosierkopf bzw. Fördereinheit genannt. Es handelt sich insbesondere um den Bereich, der vom Fördermedium durchströmt (angesaugt und/oder gefördert) wird. Bevorzugt ist der Pumpenkopf begrenzt durch ein Saugventil, ein Druckventil und ein Förderorgan (wie einer Membran eines Kolbens oder dergleichen). Damit könnte der Pumpenkopf auch "Dosiervorrichtung" bezeichnet werden.

Bei einer weiteren bevorzugten Ausführungsform handelt es sich bei der Ventileinrichtung um ein Magnetventil. Magnetventile bzw. magnetisch gesteuerte Ventile haben den Vorteil, dass sie sehr schnell schaltbar sind und auch mit sehr hohen Zyklusgeschwindigkeiten.

Bei einer weiteren vorteilhaften Ausführungsform weist die Vorrichtung eine Steuerungseinrichtung zum Steuern der Ventileinrichtung und insbesondere der als Magnetventil ausgebildeten Ventileinrichtung auf. Insbesondere ist dabei diese Steuerungseinrichtung zum zyklischen Ansteuern des Magnetventils geeignet.

Besonders bevorzugt ist die Steuerungseinrichtung dazu geeignet und bestimmt, die Ventileinrichtung in Reaktion oder unter Berücksichtigung einer (Förder)Bewegung der Pumpeneinrichtung und insbesondere eines Pumpenhubs zu steuern. So kann beispielsweise das Magnetventil zyklisch mit jedem n-ten Pumpenhub angesteuert werden (wobei n bevorzugt eine natürliche Zahl ist).

So kann beispielsweise die Ventileinrichtung unter Berücksichtigung einer Position eines Elements der Pumpeneinrichtung, beispielsweise unter Berücksichtigung der Position eines Pumpenkolbens, einer Membran einer Membranpumpe oder einer Stellung eines Ventils der Pumpeneinrichtung (insbesondere wenn es sich bei der Pumpeneinrichtung um eine Membranpumpe handelt) gesteuert werden. Dabei ist bevorzugt eine Erfassungseinrichtung vorgesehen, welche diese Position oder Stellung erfasst. Es wäre jedoch auch möglich, diese Daten aus einer Pumpensteuerung zu erhalten.

Weiterhin ist, wie unten genau beschrieben, die Steuerungseinrichtung dazu geeignet und bestimmt, die Ventileinrichtung auch in Abhängigkeit von unterschiedlichen Betriebsarten der Vorrichtung zu steuern. So ist es beispielsweise möglich, dass in einem Dosierbetrieb die Ventileinrichtung zyklisch geöffnet wird, um in diesem Dosierbetrieb entstehende Gasbläschen sicher auszuschleusen. Die genaueren Vorgehensweisen werden unten beschrieben. Dieses zyklische Öffnen der Ventileinrichtung ist dabei bevorzugt an den Pumpenzyklus der Pumpeneinrichtung angepasst.

Bei einer weiteren bevorzugen Ausführungsform weist die Vorrichtung eine Überwachungseinrichtung zur Überwachung des Entlüftungsvorgangs auf. Auf diese Weise kann auch im laufenden Betrieb stets überwacht werden, ob und in welchem Maße eine Entlüftung vorgenommen wird oder ggf. nötig ist. Dabei kann die Steuerung des Ventils an diese Überwachung angepasst werden.

Bei einer bevorzugten Ausführungsform ist die Ventileinrichtung auch manuell und/oder durch einen Benutzereingriff betätigbar. So ist beispielsweise eine händische Betätigung der Ventileinrichtung ebenfalls möglich. Auf diese Weise ist beispielsweise eine Notbetätigung oder eine Notentlüftung möglich. So ist es möglich, dass ein Benutzer unmittelbar die Ventileinrichtung betätigt. Es wäre jedoch auch möglich, dass der Benutzer mittels einer Steuerungseinrichtung die Ventileinrichtung betätigt.

Bei bevorzugten Ausführungsform handelt es sich bei der Ventileinrichtung um ein Einschraubventil, d. h. ein Ventil, das in einem bestimmten Bereich der Pumpeneinrichtung einschraubbar ist. Bevorzugt handelt es sich bei der Ventileinrichtung um ein Zweiwegeventil.

Es wäre möglich, das Ventil zur Entlüftung an unterschiedlichen Positionen anzuordnen, etwa auch zwischen dem Pumpenkopf und der Düseneinrichtung. Insbesondere bei einem Aufbau mit einer direkt angebauten Düse ist jedoch eine Installation am höchsten Punkt im Pumpenkopf vorteilhaft.

Bei einer bevorzugten Ausführungsform weist die Ventileinrichtung eine Sitzabdichtung und insbesondere eine Weichsitzabdichtung auf. Daneben ist besonders bevorzugt die Ventileinrichtung totraumarm ausgebildet.

Diese Ausgestaltung hat den (konstruktiven) Vorteil, dass das Ventilinnenvolumen (also der medienberührte Teil) möglichst gering ausgeführt ist. Auf diese Weise wird erreicht, dass der Wirkungsgrad der Pumpeneinrichtung und die Dosiergenauigkeit nicht zu stark beeinflusst werden.

Es wird damit erreicht, dass die Pumpen einen sehr kleinen "Schadraum" zwischen Membran und Düse aufweist. Auf diese Weise kann die Genauigkeit und Zuverlässigkeit (insbesondere in Zusammenhang mit der Entlüftung) verbessert werden.

Bei einer weiteren bevorzugten Ausführungsform ist die Ventileinrichtung in einem Bereich der Pumpeneinrichtung und insbesondere eines Produktraumes der Pumpeneinrichtung angeordnet, und/oder die Ventileinrichtung ist (bezogen auf das zu fördernde Medium) in einem oberen und insbesondere einem höchsten Bereich der Pumpeneinrichtung und/oder des Produktraumes angeordnet. Unter dem höchsten Bereich wird dabei ein Bereich verstanden, der in einer vertikalen bzw. zum Erdmittelpunkt gerichteten Richtung am höchsten im Vergleich zu anderen Bereichen angeordnet ist. Bevorzugt ist die Ventileinrichtung derart angeordnet, dass sich ein gasförmiges Medium in einem Bereich der Ventileinrichtung sammeln kann.

Auf diese Weise ist in besonders günstiger Weise eine Entlüftung der Pumpeneinrichtung möglich. Insbesondere können auf diese Weise in besonders günstiger Weise Gasblasen aus der Pumpeneinrichtung abgeführt, bzw. ausgeschleust werden.

Bei einer weiteren bevorzugten Ausführungsform schließt sich an die Ventileinrichtung (und insbesondere an einen Ausgang der Ventileinrichtung) eine Leitung zum Leiten von Entlüftungsgasen und/oder einer Flüssigkeit (und insbesondere der zu fördernden Flüssigkeit) an. Prinzipiell wäre es auch möglich, die Entlüftung in die Umgebung vorzunehmen. Allerdings wird gerade im Hinblick auf die Konservierungsmittel vorgeschlagen, dass diese wieder rückgeführt werden. Dabei ist es möglich, dass während des Entlüftungsvorgangs sowohl Gase abgeführt werden als auch Flüssigkeit. Aus diesem Grunde dient die Leitung dazu, diese Medien wenigstens teilweise und insbesondere die flüssigen Medien wieder einem Kreislauf zuzuführen und/oder der Pumpeneinrichtung zurückzuführen. Wie unten genauer beschrieben wird, kann die abgeführte Gas- und/oder die Flüssigkeit über diese Leitung in ein Gefäß geführt werden.

Bei dem erfindungsgemäßen Messgefäß kann es sich beispielsweise um eine Messbürette handeln, d. h. ein Gefäß, welches eine Messskala aufweist. Allgemein wird im Zusammenhang mit der vorliegenden Erfindung unter einem Messgefäß eine Einrichtung verstanden, welche ein Aufnahmevolumen zur Aufnahme eines flüssigen Mediums aufweist und welche darüber hinaus eine Bestimmung dieses Volumens ermöglicht. Dabei kann ein Messgefäß auch einen Durchtritt von Flüssigkeit ermöglichen.

Bei einer weiteren vorteilhaften Ausführungsform weist die Vorrichtung einen Aufnahmeraum zum wenigstens zeitweiligen Aufnehmen eines über die Ventileinrichtung aus der Pumpeneinrichtung abgeführten flüssigen Mediums auf. Dieser Aufnahmeraum steht dabei bevorzugt in Strömungsverbindung mit der oben beschriebenen Leitung, welche sich an die Ventileinrichtung anschließt. Dieser Aufnahmeraum wird bevorzugt durch das oben beschriebene Messgefäß ausgebildet.

Bevorzugt wird damit die abgeführte Gas- oder Flüssigkeitsmenge über eine Leitung in ein saugseitiges Kalibriergefäß bzw. Messgefäß gefördert. Bevorzugt ist dieses Messgefäß derart ausgebildet, dass eine Gasphase entweichen kann und eine Flüssigkeitsfase dem Prozess und/oder der Pumpeneinrichtung erneut zugeführt wird bzw. zuführbar ist.

Bevorzugt weist daher die Vorrichtung und insbesondere das Messgefäß eine Trenneinrichtung auf, um gasförmige und flüssige Anteile des über das Entlüftungsventil entweichenden Mediums trennen zu können. Diese Trenneinrichtung kann dabei auch durch die Gestalt des Messgefäßes selbst gebildet sein.

Bevorzugt weist das Messgefäß eine Füllstands - Messeinrichtung auf. Besonders bevorzugt weist dieses Messgefäß eine Schwimmeinrichtung insbesondere zur Füllstandsmessung auf. Es wären jedoch auch andere Sensoren möglich, welche zur Bestimmung eines Füllstands innerhalb eines Messgefäßes geeignet und bestimmt sind.

Bei einer weiteren bevorzugten Ausführungsform weist die Vorrichtung eine Auswerteeinrichtung zur Auswertung und/oder Bestimmung des Füllstands (des Messgefäßes) auf. Dabei kann beispielsweise eine Bildaufnahmeeinrichtung wie eine Kamera eingesetzt werden, welche den Füllstand innerhalb des Messgefäßes überwacht. Auch diese Füllstands - Messeinrichtung kann dabei Daten ausgeben, welche zum Steuern der Pumpeneinrichtung und/oder der Ventileinrichtung verwendbar sind.

Bei einer weiteren bevorzugten Ausführungsform weist die Vorrichtung eine Sensoreinrichtung auf, welche wenigstens einen Parameter erfasst, der für die aus der Ventileinrichtung weitergeleitete Substanz bzw. die Medien charakteristisch ist. So kann beispielsweise in der sich an die Ventileinrichtung anschließenden Leitung eine Durchflussmesseinrichtung vorgesehen sein, um das in der Leitung strömende gasförmige und/oder flüssige Medium hinsichtlich seines Durchflusses zu bestimmen.

Daneben kann auch eine Messeinrichtung vorgesehen sein, welche einen Parameter ausgibt, der dafür charakteristisch ist, ob es sich bei dem austretenden Medium um ein gasförmiges oder ein flüssiges Medium handelt.

Bevorzugt kann hier beispielsweise (als Messeinrichtung oder Sensoreinrichtung) ein Temperaturfühler verwendet werden. Bevorzugt wird dieser Temperaturfühler (insbesondere elektronisch gesteuert) auf einer geeigneten Temperatur gehalten. Sobald flüssiges Medium aus der Ventileinrichtung weitergeleitet wird und dieses auf den Temperaturfühler trifft, verändert sich die Temperatur des Fühlers, denn die Temperatur der Flüssigkeit liegt bevorzugt etwas niedriger als die des Fühlers. Der Temperaturfühler kann damit ein Signal für die Steuerung abbilden um das rückgeströmte Medium zu detektieren.

Es kämen jedoch auch andere Messverfahren in Betracht, wie etwa eine Ultraschallmessung oder eine Massedurchflußerfassung- Bevorzugt wird jedoch, wie beschrieben, ein kalorimetrisches Verfahren zur Durchflusserfassung angewandt,
Auf Basis der Messwerte dieser Sensoreinrichtung kann festgestellt werden, ob aus der Pumpe Gas entweicht oder bereits Flüssigkeit.

Besonders bevorzugt ist damit eine Sensoreinrichtung vorgesehen und insbesondere ist in der genannten Leitung eine Sensoreinrichtung installiert, welche die Entlüftungsfunktion überwacht. Solange beispielsweise ein Gas an der Sensoreinrichtung vorbeiströmt, ist der Entlüftungsvorgang fortzusetzen. Wenn Flüssigkeit an der Sensoreinrichtung entlang strömt, ist die Entlüftung erfolgreich beendet.

Bei einer weiteren bevorzugten Ausführungsform weist das Messgefäß einen Zulauf für eine Flüssigkeit und/oder einen Ablauf für eine Flüssigkeit auf, wobei dieser Ablauf in Strömungsverbindung mit der Pumpeneinrichtung steht. Bevorzugt weist das Messgefäß auch eine Abführeinrichtung zum Abführen eines gasförmigen Mediums auf. Diese Abführeinrichtung kann dabei eine Filtereinrichtung zum Filtern des abzuführenden Mediums aufweisen.

Das saugseitige Messgefäß bzw. die saugseitige Messbürette weist, wie oben erwähnt, bevorzugt einen Schwimmer auf, mit dessen Hilfe der Pegelstand in dem Gefäß überwacht wird und insbesondere in einem Normalbetrieb eine Berechnung der tatsächlichen Dosiermenge der Pumpe ermöglicht wird.

Während einer Pumpenentlüftung, beispielsweise wenn die Pumpeneinrichtung in Betrieb und die Ventileinrichtung geöffnet ist, sinkt der Pegel in dem Messgefäß, da die Pumpe Flüssigkeit ansaugt, jedoch Gas über das Magnetventil ausschleust. Wenn in diesem Betriebsvorgang Pumpenentlüftung der Entlüftungsvorgang erfolgreich beendet ist, gleicht die von der Pumpe angesaugte Flüssigkeitsmenge diejenige Menge, die über das Ventil und die Leitung bzw. Rücklaufleitung dem Messgefäß zugeführt wird, aus. In diesem Zustand bleibt der Pegelstand in dem Messgefäß stabil.

Bei einer weiteren bevorzugten Ausführungsform weist die Vorrichtung wenigstens eine Temperaturmesseinrichtung zur Erfassung einer Temperatur wenigstens eines Elements der Pumpeneinrichtung auf. Bevorzugt handelt es sich bei dem entsprechenden Element um den Pumpenkopf und/oder einen Kolben und/oder einen Membranabschnitt der Pumpeneinrichtung oder allgemein um ein bewegliches Element der Pumpeneinrichtung, welches in unmittelbarem Kontakt mit dem zu fördernden Medium steht. Erhöhte Temperaturen (jedoch Temperaturen unter 45°C) verstärken Zersetzungsvorgänge des Dimethyldicarbonats und damit die Gasphasenbildung.

Besonders bevorzugt steuert die oben erwähnte Steuerungseinrichtung auch die Ventileinrichtung unter Berücksichtigung dieser gemessenen Temperatur. So kann beispielsweise die Steuerungseinrichtung die Intervalle der zyklischen Entlüftungshübe und/oder die Intervalle der Ventilöffnungen verkürzen.

Die vorliegende Erfindung ist weiterhin auf ein Verfahren zur Konservierung von Getränken gerichtet, welches die Merkmale des Anspruchs 10 aufweist, wobei mittels einer Messeinrichtung eine Durchflussmenge einer durch eine Getränkeleitung fließenden Flüssigkeit bestimmt wird und mittels einer Pumpeneinrichtung ein Konservierungsmittel und insbesondere Dialkyldicarbonate in die Getränkeleitung gefördert werden, wobei eine Förderleitung in die Getränkeleitung mündet und die Pumpeneinrichtung die Konservierungsmittel durch diese Getränkeleitung fördert und wobei die Pumpeneinrichtung in Abhängigkeit von einer von der Messeinrichtung bestimmten Durchflussmenge gesteuert wird, und wobei die Pumpeneinrichtung wenigstens zeitweise mittels einer Entlüftungseinrichtung entlüftet wird, wobei diese Entlüftung mittels einer gesteuerten Ventileinrichtung erfolgt und ein über die Ventileinrichtung abgeführtes gasförmiges und/oder flüssiges Medium in ein Messgefäß geleitet wird und/oder ein über die Ventileinrichtung abgeführtes Medium analysiert wird, um festzustellen ob es sich um ein gasförmiges oder um ein flüssiges Medium handelt.

Besonders bevorzugt ist die Pumpeneinrichtung in unterschiedlichen Betriebszuständen betreibbar. Bei einem bevorzugten Verfahren wird in einem Arbeitsbetrieb die Ventileinrichtung zyklisch gesteuert und/oder in einem Arbeitsbetrieb die Ventileinrichtung unter Berücksichtigung eines Pumpbetriebs der Pumpeneinrichtung gesteuert.

So ist es beispielsweise möglich, dass in einem Dosierbetrieb die Ventileinrichtung, bei der sich insbesondere um ein Magnetventil handelt, zyklisch geöffnet wird, um im Betrieb entstehende Gasblasen sicher auszuschleusen. Bevorzugt erfolgt dabei diese Öffnung der Ventileinrichtung vor dem nachfolgenden Dosierhub und bevorzugt in einem vorgegebenen Zeitraum vor diesem Dosierhub.

Bevorzugt ist dieser vorgegebene Zeitraum geringer als 0,5 s, bevorzugt geringer als 0,3 Sekunden, bevorzugt geringer als 0,2 s, bevorzugt geringer als 0,1 Sekunden, bevorzugt geringer als 0,08 s, bevorzugt geringer als 0,06 s, bevorzugt geringer als 0,05 s, bevorzugt geringer als 0,04 s, bevorzugt geringer als 0,03 s, bevorzugt geringer als 0,02 s.

Bevorzugt ist dieser Zeitraum größer als 1/100 s, bevorzugt größer als 2/100 s und bevorzugt größer als 3/100 s.

Auf diese Weise ist eine Ventilbetätigung bei einem drucklosen Zustand oder einem geringen Pumpeninnendruck möglich. So wird die Dosiergenauigkeit der Pumpeneinrichtung nur gering beeinflusst und es wird andererseits auch nur ein geringer Kraftbedarf für das Magnetventil bzw. zu dessen Betätigung benötigt.

Daneben kann auch in Produktionspausen eine Entlüftung vorgenommen werden in einer Betriebsart, in der zwar die Produktion stattfindet, jedoch kein Pumpenbetrieb, der das Konservierungsmittel in die Getränkeleitung einschleust. Hier kann die Ventileinrichtung zyklisch geöffnet werden um entstehende Gasbläschen sicher auszuschleusen und/oder um bei dem nächsten Pumpenhub mit der geforderten Genauigkeit zu dosieren.

Weiterhin ist bevorzugt die Vorrichtung in einer Betriebsart Erwärmung bzw. Heizen betreibbar und/oder wird zumindest zeitweise in dieser Betriebsart betrieben. Dies ist insbesondere eine Wartestellung vor dem Eintreffen einer weiteren Charge des abzufüllenden Getränks. In dieser Betriebsart werden bevorzugt zyklische automatische Pumpenhübe bei einem geöffneten Ventil ausgelöst. In diesem Vorgang wird bevorzugt die Pumpenbereitschaft trotz Gasblasenbildung in dem Pumpenkopf beibehalten, wobei diese Gasblasen in diesem Vorgang zyklisch ausgeschleust werden.

Wie oben erwähnt, kann bei einer höheren Temperatureinwirkung eine verstärkte Wärmeleitung zum Pumpenkopf hin auftreten, wobei erhöhte Temperaturen Zersetzungsvorgänge und damit die Gasblasenbildung erhöhen. Bevorzugt werden hier die Intervalle der zyklischen Entlüftungshübe (wie oben unter der Betriebsart Heizen beschrieben) verändert und insbesondere verkürzt. Bevorzugt ermöglicht die Anlagensteuerung eine Betriebsart Entlüftung, die manuell oder allgemein durch einen Benutzereingriff anwählbar ist und bei der die Pumpeneinrichtung in einem (vorteilhaft festen) Zeitintervall mit einem geöffneten Ventil betrieben wird. Bei dieser Betriebsart erfolgt ein intensiver Entlüftungs- bzw. Entgasungsvorgang.

Weitere Vorteile und Ausführungsformen ergeben sich aus den beigefügten Zeichnungen:
Darin zeigen:
- Fig. 1: eine schematische Darstellung einer erfindungsgemäßen Vorrichtung;
- Fig. 2: eine detailliertere Darstellung des Entlüftungsvorgangs.

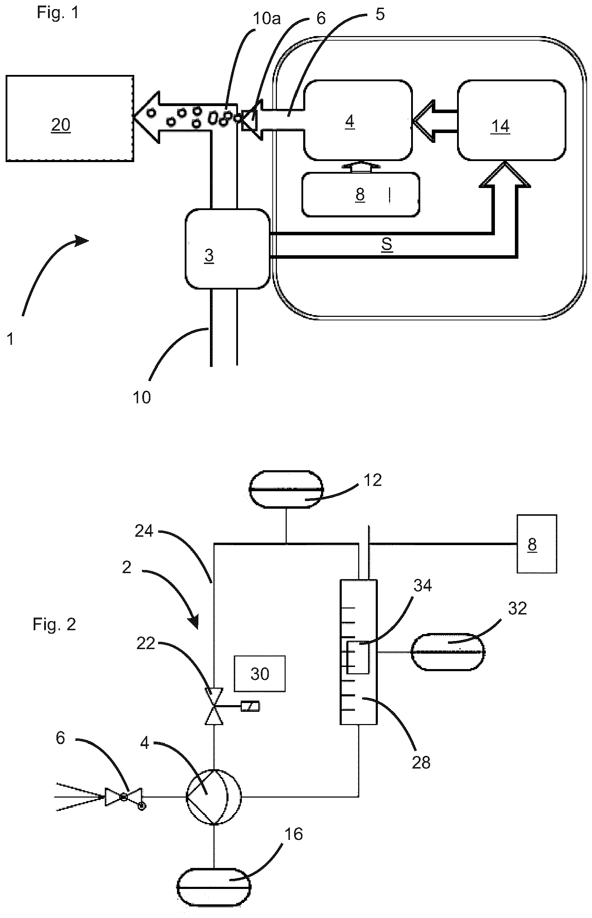

Figur 1 zeigt eine Vorrichtung 1 zum Konservieren von Getränken nach dem internem Stand der Technik der Anmelderin. Dabei bezieht sich das Bezugszeichen 10 auf eine Getränkeleitung, über welche eine in Behältnisse abzufüllende Flüssigkeit und insbesondere ein Getränk einer Füllmaschine 20 zugeführt wird. Das Bezugszeichen 2 kennzeichnet eine Durchflussmesseinrichtung, welche einen Durchfluss des Getränks durch die Getränkeleitung 20 bestimmt bzw. misst. Diese Durchflussmesseinrichtung 3 gibt ein Steuersignal S an eine Steuerungseinrichtung 14 aus. Diese Steuerungseinrichtung 14 steuert unter Berücksichtigung dieses Steuersignals S die Pumpeinrichtung 4.

Die Pumpeneinrichtung 4 pumpt aus einem Reservoir 8 ein Konservierungsmittel ab und fördert dieses über einen Düsenkopf 6 in die Getränkeleitung 10, genauer gesagt hier in einem gekrümmten Bereich 10a der Getränkeleitung 10. Das Bezugszeichen 5 kennzeichnet eine Förderleitung und bevorzugt ist auch der Düsenkopf ein Bestandteil dieser Förderleitung 5.

Figur 2 zeigt eine detailliertere Darstellung zur Veranschaulichung der Erfindung. Auch hier ist wieder die Pumpeneinrichtung 4 dargestellt, bei der sich hier um eine Membranpumpe, insbesondere um eine Dosierpumpe, handelt.

An einem (bevorzugt) oberen Bereich dieser Pumpeneinrichtung ist eine Ventileinrichtung 22 vorgesehen, welche einen Bestandteil der in ihrer Gesamtheit mit 2 bezeichneten Entlüftungseinrichtung darstellt. Diese Ventileinrichtung 22 ist dabei, wie oben erwähnt, bevorzugt ein Magnetventil. Dieses Magnetventil kann von einer Steuerungseinrichtung 30 (nur schematisch dargestellt) angesteuert werden, um zu öffnen und zu schließen.

An diese Magnetventileinrichtung 22 schließt sich eine Entlüftungsleitung 24 an. Das Bezugszeichen 3 kennzeichnet eine Messeinrichtung, welche feststellt, ob in dieser Entlüftungsleitung 24 ein gasförmiges oder flüssiges Medium fließt bzw. strömt. Auf diese Weise kann festgestellt werden, ob die Entlüftung erfolgreich ist oder ob in der Pumpeneinrichtung 4 noch Luft bzw. allgemein Gas befindlich ist.

Die Leitung 24 mündet bevorzugt in ein Messgefäß 28. Dieses weist eine Schwimmereinrichtung 34 auf sowie eine Skalierung, mit der der Füllstand der Flüssigkeit in der Messeinrichtung 3 bzw. dem Messgefäß 28 geprüft werden kann.

Das Bezugszeichen 32 kennzeichnet eine optional vorhandene Sensoreinrichtung, welche einen Füllstand der Flüssigkeit in dem Messbehältnis erfasst. Auch die Daten dieser Messeinrichtung 32 werden bevorzugt zur Steuerung der Ventileinrichtung 22 und/oder zur Steuerung der Pumpeneinrichtung 4 verwendet.

Das Bezugszeichen 16 kennzeichnet eine optional vorhandene Temperaturmesseinrichtung, welche eine Temperatur wenigstens eines Elements der Pumpeneinrichtung 4 und insbesondere eine Temperatur im Bereich des Pumpenkopfes misst. In Abhängigkeit von dieser Temperatur kann sich auch ein Entgasungsverhalten innerhalb der zu dosierenden Flüssigkeit ändern. Bevorzugt werden daher auch Daten dieser Temperaturerfassungseinrichtung 16 verwendet, um die Ventileinrichtung 22 und/oder die Pumpeneinrichtung 4 anzusteuern.

Daneben werden bevorzugt auch Daten zur Steuerung der Ventileinrichtung 22 verwendet, welche sich auf den Betrieb der Pumpeneinrichtung 4 selbst beziehen. So können etwa Daten herangezogen werden, welche die Position eines Pumpenelementes wie eines Pumpenkolbens oder dergleichen charakterisieren. Auch diese Daten werden bevorzugt herangezogen, um die Ventileinrichtung 22 zu steuern. So ist es beispielsweise möglich, dass die Ventileinrichtung 22 stets zu einem bestimmten Zeitraum betätigt wird, beispielsweise wie oben erwähnt kurz bevor ein weiterer Pumpenhub ansteht.

Als Konservierungsmittel werden bevorzugt Dialkyldicarbonate eingesetzt. Ganz besonders bevorzugt wird Dimethyldicarbonat eingesetzt, noch weiter bevorzugt wird Dimethyldicarbonat mit einer Reinheit >99.8% als Konservierungsmittel eingesetzt. In einer weiteren Ausführungsform der Erfindung wird Dimethyldicarbonat eingesetzt, welches durch geeignete Verfahren stabilisiert wurde.

Derartige Verfahren, wie beispielsweise die Verwendung einer Phosphorverbindung aus der Reihe Phosphoroxide, Phosphor-Sauerstoff-Säuren und deren Derivate sind beispielsweise aus der EP 2 013 160 B1 bekannt. Die EP 2 016 041 B1 beschreibt die Verwendung von mindestens einer Protonen-Säure aus der Reihe der anorganischen Säuren und der organischen Carbonsäuren und deren Derivate, wobei es sich bei den organischen Carbonsäuren 20 um gesättigte und ein- oder mehrfach ungesättigte aliphatische Monocarbonsäuren und gesättigte und ein- oder mehrfach ungesättigte aliphatische Di- und Polycarbonsäuren und bei deren Derivaten um Hydroxamsäuren, Hydroxycarbonsäuren, Aldehyd- und Ketosäuren handelt, zur Stabilisierung von Dialkyldicarbonaten gegen chemische und thermische Abbaureaktionen, wobei die Protonen-Säure oder deren Mischungen in einer Menge von 0.01 bis 100 000 ppm bezogen auf Dialkyldicarbonate oder deren Mischungen eingesetzt wird.

In einer weiteren Ausführungsform der Erfindung wird Dimethyldicarbonat in einer Mischung mit Phosphorverbindungen, wie vorzugsweise Phosphaten, noch weiter bevorzugt mit Trimethylphoshat oder Phosphorsäure eingesetzt. Vorzugsweise wird die Phosphorverbindung in 30 einer Menge zwischen 0,01 ppm und 1000 ppm bezogen auf die Gesamtmenge der Mischung aus Dimethyldicarbonat und Phosphorverbindungen eingesetzt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in der Figur auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

Der Schutzumfang wird durch die jeweiligen Gegenstände der nachfolgenden Patentansprüche definiert.

### Bezugszeichenliste

- 1: Vorrichtung
- 2: Entlüftungseinrichtung
- 3: Messeinrichtung
- 4: Pumpeneinrichtung
- 5: Förderleitung
- 6: Düsenkopf
- 8: Reservoir
- 10: Getränkeleitung
- 10a: gekrümmter Bereich
- 12: Überwachungseinrichtung
- 14: Steuerungseinrichtung
- 16: Temperaturerfassungseinrichtung
- 18: Temperaturmesseinrichtung
- 20: Getränkeleitung
- 22: Ventileinrichtung
- 24: Leitung/ Entlüftungsleitung
- 28: Messgefäß
- 30: Steuerungseinrichtung
- 32: Sensoreinrichtung
- 34: Schwimmereinrichtung

## Patentansprüche

1. Vorrichtung (1) zur Konservierung von Getränken mit einer Messeinrichtung (3), welche dazu geeignet und bestimmt ist, eine Durchflussmenge einer durch eine Getränkeleitung (10) fließenden Flüssigkeit zu bestimmen, und mit einer Pumpeneinrichtung (4), welche ein Konservierungsmittel, insbesondere Dialkyldicarbonate, in die Getränkeleitung (10) fördert, wobei die Pumpeneinrichtung (4) in Abhängigkeit von einer von der Messeinrichtung (3) bestimmten Durchflussmenge steuerbar ist, wobei die Vorrichtung eine Entlüftungseinrichtung (2) zur Entlüftung der Pumpeneinrichtung (4) aufweist, und wobei die Entlüftungseinrichtung (2) eine Ventileinrichtung (22) aufweist,
**dadurch gekennzeichnet, dass**
die Vorrichtung (1) ein Messgefäß (28) zur Erfassung eines Pegelstands eines flüssigen und/oder gasförmigem Mediums aufweist, wobei eine sich an die Ventileinrichtung (22) anschließende Leitung (24) zum Leiten eines gasförmigen und/oder flüssigen Mediums in das Messgefäß (28) mündet.

2. Vorrichtung (1) nach Anspruch 1,
**dadurch gekennzeichnet, dass**
die Ventileinrichtung (22) ein Magnetventil (22) ist.

3. Vorrichtung (1) nach wenigstens einem der vorangegangenen Ansprüche,
**dadurch gekennzeichnet, dass**
die Vorrichtung (1) eine Steuerungseinrichtung (30) zum Steuern der Ventileinrichtung (22) aufweist.

4. Vorrichtung (1) nach wenigstens einem der vorangegangenen Ansprüche,
**dadurch gekennzeichnet, dass**
die Vorrichtung (1) eine Überwachungseinrichtung (12) zur Überwachung des Entlüftungsvorgangs aufweist.

5. Vorrichtung (1) nach wenigstens einem der vorangegangenen Ansprüche,
**dadurch gekennzeichnet, dass**
die Ventileinrichtung (22) auch manuell und/oder durch Benutzerbetätigung betätigbar ist.

6. Vorrichtung (1) nach wenigstens einem der vorangegangenen Ansprüche,
**dadurch gekennzeichnet, dass** die Ventileinrichtung (22) in einem Bereich eines Pumpenkopfes der Pumpeneinrichtung (4) angeordnet ist und/oder die Ventileinrichtung (22) einem höchsten Bereich der Pumpeneinrichtung (4) angeordnet ist.

7. Vorrichtung (1) nach wenigstens einem der vorangegangenen Ansprüche,
**dadurch gekennzeichnet, dass** sich an die Ventileinrichtung (22) eine Leitung (24) zum Leiten von Entlüftungsgasen und/oder einer Flüssigkeit anschließt.

8. Vorrichtung (1) nach wenigstens einem der vorangegangenen Ansprüche,
**dadurch gekennzeichnet, dass** das Messgefäß (28) einen Zulauf für eine Flüssigkeit und/oder einen Ablauf für eine Flüssigkeit aufweist, wobei bevorzugt dieser Ablauf in Strömungsverbindung mit der Pumpeneinrichtung (4) steht.

9. Vorrichtung (1) nach wenigstens einem der vorangegangenen Ansprüche,
**dadurch gekennzeichnet, dass** die Vorrichtung (1) wenigstens eine Temperaturmesseinrichtung (18) zur Erfassung einer Temperatur wenigstens eines Elementes der Pumpeneinrichtung (4) aufweist.

10. Verfahren zur Konservierung von Getränken, wobei mittels einer Messeinrichtung (3) eine Durchflussmenge einer durch eine Getränkeleitung (10) fließenden Flüssigkeit bestimmt wird und mittels einer Pumpeneinrichtung (4) ein Konservierungsmittel, insbesondere Dialkyldicarbonate, in die Getränkeleitung gefördert wird, wobei eine Förderleitung in die Getränkeleitung (10) mündet und die Pumpeneinrichtung (4) die Konservierungsmittel durch diese Getränkeleitung (10) fördert, wobei die Pumpeneinrichtung (4) in Abhängigkeit von einer von der Messeinrichtung (3) bestimmen Durchflussmenge gesteuert wird, und wobei die Pumpeneinrichtung (4) wenigstens zeitweise mittels einer Entlüftungseinrichtung (2) entlüftet wird, wobei diese Entlüftung mittels einer gesteuerten Ventileinrichtung (22) erfolgt, **dadurch gekennzeichnet, dass** ein über die Ventileinrichtung (22) abgeführtes gasförmiges und/oder flüssiges Medium in ein Messgefäß (28) geleitet wird und/oder ein über die Ventileinrichtung (22) abgeführtes Medium analysiert wird, um festzustellen ob es sich um ein gasförmiges oder um ein flüssiges Medium handelt.

11. Verfahren nach Anspruch 10,
**dadurch gekennzeichnet, dass**
das in einem Arbeitsbetrieb die Ventileinrichtung (22) zyklisch gesteuert wird und/oder in einem Arbeitsbetrieb die Ventileinrichtung (22) unter Berücksichtigung eines Pumpbetriebs der Pumpeneinrichtung (4) gesteuert wird.

12. Verfahren nach wenigstens einem der vorangegangenen Ansprüche,
**dadurch gekennzeichnet, dass**
wenigstens zeitweise eine Temperatur wenigstens eines Elements der Pumpeneinrichtung (4) bestimmt wird.

## Claims

1. Apparatus (1) for preserving beverages, having a measuring device (3) which is suitable and intended for determining a flow rate of a liquid flowing through a beverage line (10), and having a pump device (4) which conveys a preservative, in particular dialkyl dicarbonates, into the beverage line (10), wherein the pump device (4) being controllable as a function of a flow rate determined by the measuring device (3), wherein the apparatus having a venting device (2) for venting the pump device (4) and wherein the venting device (2) has a valve device (22),
**characterised in that**
the apparatus (1) has a measuring vessel (28) for detecting a level of a liquid and/or gaseous medium, wherein a line (24) for conducting a gaseous and/or liquid medium, which is connected to the valve device (22), opens into the measuring vessel (28).

2. Apparatus (1) according to claim 1,
**characterised in that**
the valve device (22) is a solenoid valve (22).

3. Apparatus (1) according to at least one of the preceding claims,
**characterised in that**
the apparatus (1) comprises a control device (30) for controlling the valve device (22).

4. Apparatus (1) according to at least one of the preceding claims,
**characterised in that**
the apparatus (1) comprises a monitoring device (12) for monitoring the venting process.

5. Apparatus (1) according to at least one of the preceding claims,
**characterised in that**
the valve device (22) can also be actuated manually and/or by user actuation.

6. Apparatus (1) according to at least one of the preceding claims,
**characterised in that**
the valve device (22) is arranged in a region of a pump head of the pump device (4) and/or the valve device (22) is arranged in a highest region of the pump device (4).

7. Apparatus (1) according to at least one of the preceding claims,
**characterised in that**
a line (24) for conducting venting gases and/or a liquid is connected to the valve device (22).

8. Apparatus (1) according to at least one of the preceding claims,
**characterised in that**
the measuring vessel (28) has an inlet for a liquid and/or an outlet for a liquid, wherein preferably this outlet being in flow connection with the pump device (4).

9. Apparatus (1) according to at least one of the preceding claims,
**characterised in that**
the apparatus (1) comprises at least one temperature measuring device (18) for detecting a temperature of at least one element of the pump device (4).

10. Method for preserving beverages, wherein a flow rate of a liquid flowing through a beverage line (10) is determined by a measuring device (3) and a preservative, in particular dialkyl dicarbonate, is conveyed into the beverage line by a pump device (4), wherein a delivery line opening into the beverage line (10) and the pump device (4) conveys the preservative through this beverage line (10), wherein the pump device (4) being controlled as a function of a flow rate determined by the measuring device (3),
and wherein the pump device (4) is vented at least temporarily by a venting device (2), wherein this venting being carried out by a controlled valve device (22),
**characterised in that**
a gaseous and/or liquid medium discharged via the valve device (22) is passed into a measuring vessel (28) and/or a medium discharged via the valve device (22) is analysed in order to determine whether it is a gaseous or a liquid medium.

11. Method according to claim 10,
**characterised in that**
in a working mode the valve device (22) is controlled cyclically and/or in a working mode the valve device (22) is controlled taking into account a pumping operation of the pump device (4).

12. Method according to at least one of the preceding claims,
**characterised in that**
a temperature of at least one element of the pump device (4) is determined at least temporarily.

## Revendications

1. Dispositif (1) de conservation de boissons avec un système de mesure (3), lequel est adapté pour et se destine à déterminer un débit d'un liquide s'écoulant à travers une conduite de boisson (10), et avec un système de pompage (4), lequel refoule un agent de conservation, en particulier des dicarbonates de dialkyle, dans la conduite de boisson (10), dans lequel le système de pompage (4) peut être commandé en fonction d'un débit déterminé par le système de mesure (3), dans lequel le dispositif présente un système d'évacuation de l'air (2) destiné à évacuer l'air du système de pompage (4), et dans lequel le système d'évacuation de l'air (2) présente un système de soupape (22),
**caractérisé en ce que**
le dispositif (1) présente un récipient de mesure (28) destiné à détecter un niveau d'un milieu liquide et/ou gazeux, dans lequel une conduite (24) se raccordant au système de soupape (22), destinée à acheminer un milieu gazeux et/ou liquide débouche dans le récipient de mesure (28).

2. Dispositif (1) selon la revendication 1,
**caractérisé en ce que**
le système de soupape (22) est une soupape magnétique (22).

3. Dispositif (1) selon au moins l'une quelconque des revendications précédentes,
**caractérisé en ce que**
le dispositif (1) présente un système de commande (30) destiné à commander le système de soupape (22).

4. Dispositif (1) selon au moins l'une quelconque des revendications précédentes,
**caractérisé en ce que**
le dispositif (1) présente un système de surveillance (12) destiné à surveiller l'opération d'évacuation de l'air.

5. Dispositif (1) selon au moins l'une quelconque des revendications précédentes,
**caractérisé en ce que**
le système de soupape (22) peut être actionné également manuellement et/ou par actionnement d'un utilisateur.

6. Dispositif (1) selon au moins l'une quelconque des revendications précédentes,
**caractérisé en ce que**
le système de soupape (22) est disposé dans une zone d'une tête de pompe du système de pompage (4) et/ou le système de soupape (22) est disposé dans une zone la plus haute du système de pompage (4).

7. Dispositif (1) selon au moins l'une quelconque des revendications précédentes,
**caractérisé en ce que**
une conduite (24) destinée à acheminer des gaz d'évacuation de l'air et/ou un liquide se raccorde au système de soupape (22).

8. Dispositif (1) selon au moins l'une quelconque des revendications précédentes,
**caractérisé en ce que**
le récipient de mesure (28) présente une arrivée pour un liquide et/ou une sortie pour un liquide, dans lequel de manière préférée cette sortie se trouve en communication fluidique avec le système de pompage (4).

9. Dispositif (1) selon au moins l'une quelconque des revendications précédentes,
**caractérisé en ce que**
le dispositif (1) présente au moins un système de mesure de température (18) destiné à détecter une température d'au moins un élément du système de pompage (4).

10. Procédé de conservation de boissons, dans lequel un débit d'un liquide s'écoulant à travers une conduite de boisson (10) est déterminé au moyen d'un système de mesure (3) et un agent de conservation, en particulier des dicarbonates de dialkyle, est refoulé dans la conduite de boisson au moyen d'un système de pompage (4), dans lequel une conduite de refoulement débouche dans la conduite de boisson (10) et le système de pompage (4) refoule les agents de conservation à travers ladite conduite de boisson (10), dans lequel le système de pompage (4) est commandé en fonction d'un débit déterminé par le système de mesure (3),
et dans lequel l'air est évacué du système de pompage (4) au moins par intermittence au moyen d'un système d'évacuation de l'air (2), dans lequel ladite évacuation de l'air est effectuée au moyen d'un système de soupape (22) commandé,
**caractérisé en ce que**
un milieu gazeux et/ou liquide évacué par l'intermédiaire du système de soupape (22) est acheminé dans un récipient de mesure (28) et/ou un milieu évacué par l'intermédiaire du système de soupape (22) est analysé pour constater s'il s'agit d'un milieu gazeux ou d'un milieu liquide.

11. Procédé selon la revendication 10,
**caractérisé en ce que**
le système de soupape (22) est commandé de manière cyclique dans un mode de travail et/ou le système de soupape (22) est commandé dans un mode de travail en tenant compte d'un mode de pompage du système de pompage (4).

12. Procédé selon au moins l'une quelconque des revendications précédentes,
**caractérisé en ce que**
une température d'au moins un élément du système de pompage (4) est déterminée au moins par intermittence.
